# EUROPEAN PATENT APPLICATION

(11) **EP 4 513 934 A1**
(43) Date of publication of application: **26.02.2025**
(21) Application number: 23790983.3
(22) Date of filing: 24.03.2023
(51) Int. Cl.: H04W 16/18

(54) **INFORMATION PROCESSING METHOD AND APPARATUS, AND DEVICE**

(30) Priority: 20.04.2022 CN 202210420961
(71) Applicant: Datang Mobile Communications Equipment Co., Ltd., Beijing 100085 (CN)
(72) Inventor: GAO, Qiubin, Beijing 100085 (CN); SUN, Shaohui, Beijing 100085 (CN); CHEN, Li, Beijing 100085 (CN)
(74) Representative: dompatent von Kreisler Selting Werner - Partnerschaft von Patent- und Rechtsanwälten mbB
(86) International application number: PCT/CN2023/083697
(87) International publication number: WO 2023/202323

(57) **Abstract**

The present disclosure provides an information processing method and apparatus, and device. The information processing method includes: obtaining access point information, where the access point information includes access point information detected by a second device, and/or access point information obtained based on monitoring a request signal transmitted by the second device; determining an access point set corresponding to the second device according to the access point information.

## Description

### CROSS-REFERENCE TO RELATED APPLICATION

The present application is filed based on and claims the priority of Chinese Application No. 202210420961.2 filed on April 20, 2022, the disclosure of which are incorporated in their entireties by reference herein.

### TECHNICAL FIELD

The present disclosure relates to the field of communication technologies, and in particular to an information processing method, apparatus and device.

### BACKGROUND

At present, traditional mobile communication networks are built based on cell cellular. Each cell has a fixed frequency range and pre-planned cell coverage, thereby forming continuous coverage. Specifically: each cell corresponds to a physical layer cell identity (PCID), and a base station transmits a synchronization signal carrying the physical layer cell ID. A terminal receives a cell-common initial access signal transmitted by the base station to perform cell search. The terminal detects cell information carried by the initial access signal and completes cell discovery and camping process. When there is a service need, the terminal initiates a random access process to the cell where the terminal is camped, and the base station and the terminal establish a connection through the random access process to achieve uplink and downlink synchronization. During the connection process, the terminal continues to perform radio resource management (RRM). When the terminal moves out of a coverage area of a current serving cell, the network needs to perform a cell handover process for the terminal so that the cell to which the terminal hands over can provide services.

Based on the above, the mobile communication network built based on cell cellular has the following problems:
Fixed cell division increases difficulty of collaboration between network devices (base stations); each cell manages its own resources independently, making it difficult to achieve flexible resource allocation between base stations.

From the above, information processing solutions for network coverage in related art have problems such as fixed cell division.

### SUMMARY

An object of the present disclosure is to provide an information processing method, apparatus and device, which can solve the problem of fixed cell division in the information processing solution for network coverage in the related art.

In order to solve the above technical problems, one embodiment of the present disclosure provides an information processing method, which is applied to a first device, including:
obtaining access point information; wherein the access point information includes access point information detected by a second device, and/or access point information obtained based on monitoring a request signal transmitted by the second device;
determining an access point set corresponding to the second device according to the access point information.

Optionally, the obtaining access point information includes:
controlling a candidate access point to transmit a reference signal; and
receiving the access point information transmitted by the second device after the second device detects the reference signal.

Optionally, the receiving the access point information transmitted by the second device after the second device detects the reference signal, includes:
receiving the access point information transmitted by the second device through an uplink signal;
wherein the uplink signal is obtained by the second device via modulation according to the access point information.

Optionally, the access point information is carried through a carrying item of the reference signal;
the carrying item includes at least one of time-frequency resource location, power, sequence or spatial characteristics.

Optionally, the access point information includes at least one of identifier information of the access point, cell identity information corresponding to the access point, or location information of the second device.

Optionally, when the access point information includes at least one of identifier information of the access point or cell identity information corresponding to the access point, the access point information further includes at least one of a measurement result of the second device on the reference signal corresponding to the access point information, or location information of the access point; the determining an access point set corresponding to the second device according to the access point information includes at least one of the following:
determining location information of the second device according to at least one of the identifier information of the access point or the cell identity information, and the measurement result; determining a candidate access point located in a first target area based on the location information of the second device; determining an element of the access point set corresponding to the second device according to the determined candidate access point; or,
determining, based on at least one of the identifier information of the access point or the cell identity information, and the measurement result, a candidate access point whose signal quality meets a first condition; determining an element of the access point set corresponding to the second device according to the determined candidate access point; or,
determining, based on at least one of the identifier information of the access point or cell identity information, and the location information of the access point, a candidate access point located in a second target area; determining an element of the access point set corresponding to the second device based on the determined candidate access point.

Optionally, when the access point information includes location information of the second device, the determining an access point set corresponding to the second device according to the access point information, includes:
according to the location information of the second device, determining a candidate access point located in a third target area;
determining an element of the access point set corresponding to the second device based on the determined candidate access point.

Optionally, the determining an element of the access point set corresponding to the second device based on the determined candidate access point, includes:
obtaining service information of the determined candidate access point;
obtaining the element of the access point set corresponding to the second device according to the service information of the determined candidate access point;

wherein the service information of the determined candidate access point includes at least one of the following:
a current resource occupancy rate of the determined candidate access point;
a current traffic amount of the determined candidate access point.

Optionally, the obtaining access point information includes:
controlling a candidate access point to monitor a request signal transmitted by the second device; and
obtaining the access point information based on a monitoring result of the candidate access point.

Optionally, before obtaining the access point information, the method further includes:
transmitting resource configuration information for the request signal to the second device;
wherein the resource configuration information includes at least one of: time-frequency resource location, sequence or transmission power.

Optionally, the access point information includes at least one of identifier information, location information, capability level information, service requirement information, or coverage requirement information of the second device carried by the request signal; and/or,
the access point information further includes: location information of the second device determined according to first information of the request signal; wherein the first information includes at least one of signal strength, arrival time difference or arrival angle.

Optionally, the candidate access point is determined based on the location information of the second device, or determined based on a fourth target area determined by the first device.

Optionally, the determining an access point set corresponding to the second device according to the access point information, includes:
determining the access point set corresponding to the second device according to the access point information and service information of other access point;
wherein other access point is an access point other than the access point corresponding to the access point information;
the service information of the other access point includes at least one of the following:
   a current resource occupancy ratio of other access point;
   a current traffic amount of other access point.

Optionally, after determining an access point set corresponding to the second device according to the access point information, the method includes:
transmitting an initial access signal through an access point in the access point set;
receiving a random access signal transmitted by the second device according to the initial access signal.

Optionally, frequency and/or time of the initial access signal are associated with the request signal.

Optionally, the access point information is access point information corresponding to a first reference signal;
wherein the first reference signal is a reference signal that satisfies a second condition among all reference signals detected by the second device.

Optionally, the obtaining access point information includes:
obtaining the access point information through a first connection;
wherein the first connection refers to a connection established through a first manner, the first manner includes at least one of a first access technology or a first spectrum.

One embodiment of the present disclosure further provides an information processing method, applied to a second device, including:
obtaining third information; wherein the third information includes part or all of access point information detected by a second device, and/or information carried in a request signal to be transmitted by the second device;
performing information transmission according to the third information; wherein the third information is used to determine an access point set corresponding to the second device.

Optionally, the obtaining the third information includes:
detecting a reference signal transmitted by a candidate access point;
determining the access point information based on part or all of detected reference signals;
wherein the performing information transmission according to the third information includes:
   transmitting the access point information to the first device.

Optionally, the transmitting the access point information to the first device, includes:
transmitting the access point information to the first device through an uplink signal;
wherein the uplink signal is obtained by the second device via modulation according to the access point information.

Optionally, the access point information is carried through a carrying item of the reference signal;
the carrying item includes at least one of time-frequency resource location, power, sequence or spatial characteristics.

Optionally, the access point information includes at least one of identifier information of the access point, cell identity information corresponding to the access point, or location information of the second device.

Optionally, when the access point information includes at least one of identifier information of the access point or cell identity information corresponding to the access point, the access point information further includes at least one of a measurement result of the second device on the reference signal corresponding to the access point information, or location information of the access point.

Optionally, the obtaining the third information includes:
determining information carried by a to-be-transmitted request signal;
wherein the performing information transmission according to the third information includes:
   transmitting the request signal according to the information carried by the request signal.

Optionally, before transmitting the request signal according to the information carried by the request signal, the method further includes:
obtaining resource configuration information for the request signal;
wherein the transmitting the request signal according to the information carried by the request signal, includes:
   transmitting the request signal according to the resource configuration information and the information carried by the request signal;
   wherein the resource configuration information includes at least one of: time-frequency resource location, sequence or transmission power.

Optionally, the obtaining resource configuration information for the request signal includes:
receiving the resource configuration information for the request signal transmitted by a first device; or
obtaining pre-agreed resource configuration information for the request signal.

Optionally, the information carried by the request signal includes at least one of identifier information, location information, capability level information, service requirement information, or coverage requirement information of the second device.

Optionally, after performing information transmission according to the third information, the method further includes:
receiving an initial access signal transmitted by the first device through an access point in the access point set; and
transmitting a random access signal to the first device according to the initial access signal;
wherein the access point set is determined by the first device according to the third information.

Optionally, frequency and/or time of the initial access signal are associated with the request signal.

Optionally, the access point information is access point information corresponding to a first reference signal;
wherein the first reference signal is a reference signal that satisfies a second condition among all reference signals detected by the second device.

Optionally, the performing information transmission according to the third information, includes:
performing the information transmission according to the third information through a first connection;
wherein the first connection refers to a connection established through a first manner, the first manner includes at least one of a first access technology or a first spectrum.

One embodiment of the present disclosure further provides an information processing device, applied to a second device, including: a memory, a transceiver, and a processor;
wherein the memory is used to store a computer program; the transceiver is used to transmit and receive data under the control of the processor; the processor is used to read the computer program in the memory and perform the following operations:
obtaining access point information; wherein the access point information includes access point information detected by a second device, and/or access point information obtained based on monitoring a request signal transmitted by the second device;
determining an access point set corresponding to the second device according to the access point information.

Optionally, the obtaining access point information includes:
controlling a candidate access point to transmit a reference signal; and
receiving the access point information transmitted by the second device after the second device detects the reference signal.

Optionally, the receiving the access point information transmitted by the second device after the second device detects the reference signal, includes:
receiving the access point information transmitted by the second device through an uplink signal;
wherein the uplink signal is obtained by the second device via modulation according to the access point information.

Optionally, the access point information is carried through a carrying item of the reference signal;
the carrying item includes at least one of time-frequency resource location, power, sequence or spatial characteristics.

Optionally, the access point information includes at least one of identifier information of the access point, cell identity information corresponding to the access point, or location information of the second device.

Optionally, when the access point information includes at least one of identifier information of the access point or cell identity information corresponding to the access point, the access point information further includes at least one of a measurement result of the second device on the reference signal corresponding to the access point information, or location information of the access point; the determining an access point set corresponding to the second device according to the access point information includes at least one of the following:
determining location information of the second device according to at least one of the identifier information of the access point or the cell identity information, and the measurement result; determining a candidate access point located in a first target area based on the location information of the second device; determining an element of the access point set corresponding to the second device according to the determined candidate access point; or,
determining, based on at least one of the identifier information of the access point or the cell identity information, and the measurement result, a candidate access point whose signal quality meets a first condition; determining an element of the access point set corresponding to the second device according to the determined candidate access point; or,
determining, based on at least one of the identifier information of the access point or cell identity information, and the location information of the access point, a candidate access point located in a second target area; determining an element of the access point set corresponding to the second device based on the determined candidate access point.

Optionally, when the access point information includes location information of the second device, the determining an access point set corresponding to the second device according to the access point information, includes:
according to the location information of the second device, determining a candidate access point located in a third target area;
determining an element of the access point set corresponding to the second device based on the determined candidate access point.

Optionally, the determining an element of the access point set corresponding to the second device based on the determined candidate access point, includes:
obtaining service information of the determined candidate access point;
obtaining the element of the access point set corresponding to the second device according to the service information of the determined candidate access point;
wherein the service information of the determined candidate access point includes at least one of the following:
   a current resource occupancy rate of the determined candidate access point;
   a current traffic amount of the determined candidate access point.

Optionally, the obtaining access point information includes:
controlling a candidate access point to monitor a request signal transmitted by the second device; and
obtaining the access point information based on a monitoring result of the candidate access point.

Optionally, before obtaining the access point information, the method further includes:
transmitting resource configuration information for the request signal to the second device;
wherein the resource configuration information includes at least one of: time-frequency resource location, sequence or transmission power.

Optionally, the access point information includes at least one of identifier information, location information, capability level information, service requirement information, or coverage requirement information of the second device carried by the request signal; and/or,
the access point information further includes: location information of the second device determined according to first information of the request signal; wherein the first information includes at least one of signal strength, arrival time difference or arrival angle.

Optionally, the candidate access point is determined based on the location information of the second device, or determined based on a fourth target area determined by the first device.

Optionally, the determining an access point set corresponding to the second device according to the access point information, includes:
determining the access point set corresponding to the second device according to the access point information and service information of other access point;
wherein other access point is an access point other than the access point corresponding to the access point information;
the service information of the other access point includes at least one of the following:
   a current resource occupancy ratio of other access point;
   a current traffic amount of other access point.

Optionally, after determining an access point set corresponding to the second device according to the access point information, the method includes:
transmitting an initial access signal through an access point in the access point set;
receiving a random access signal transmitted by the second device according to the initial access signal.

Optionally, frequency and/or time of the initial access signal are associated with the request signal.

Optionally, the access point information is access point information corresponding to a first reference signal;
wherein the first reference signal is a reference signal that satisfies a second condition among all reference signals detected by the second device.

Optionally, the obtaining access point information includes:
obtaining the access point information through a first connection;
wherein the first connection refers to a connection established through a first manner, the first manner includes at least one of a first access technology or a first spectrum.

One embodiment of the present disclosure further provides an information processing device, applied to a second device, including: a memory, a transceiver, and a processor;
wherein the memory is used to store a computer program; the transceiver is used to transmit and receive data under the control of the processor; the processor is used to read the computer program in the memory and perform the following operations:
obtaining third information; wherein the third information includes part or all of access point information detected by a second device, and/or information carried in a request signal to be transmitted by the second device;
performing information transmission according to the third information; wherein the third information is used to determine an access point set corresponding to the second device.

Optionally, the obtaining the third information includes:
detecting a reference signal transmitted by a candidate access point;
determining the access point information based on part or all of detected reference signals;
wherein the performing information transmission according to the third information includes:
   transmitting the access point information to the first device.

Optionally, the transmitting the access point information to the first device, includes:
transmitting the access point information to the first device through an uplink signal;
wherein the uplink signal is obtained by the second device via modulation according to the access point information.

Optionally, the access point information is carried through a carrying item of the reference signal;
the carrying item includes at least one of time-frequency resource location, power, sequence or spatial characteristics.

Optionally, the access point information includes at least one of identifier information of the access point, cell identity information corresponding to the access point, or location information of the second device.

Optionally, when the access point information includes at least one of identifier information of the access point or cell identity information corresponding to the access point, the access point information further includes at least one of a measurement result of the second device on the reference signal corresponding to the access point information, or location information of the access point.

Optionally, the obtaining the third information includes:
determining information carried by a to-be-transmitted request signal;
wherein the performing information transmission according to the third information includes:
   transmitting the request signal according to the information carried by the request signal.

Optionally, before transmitting the request signal according to the information carried by the request signal, the method further includes:
obtaining resource configuration information for the request signal;
wherein the transmitting the request signal according to the information carried by the request signal, includes:
   transmitting the request signal according to the resource configuration information and the information carried by the request signal;
   wherein the resource configuration information includes at least one of: time-frequency resource location, sequence or transmission power.

Optionally, the obtaining resource configuration information for the request signal includes:
receiving the resource configuration information for the request signal transmitted by a first device; or
obtaining pre-agreed resource configuration information for the request signal.

Optionally, the information carried by the request signal includes at least one of identifier information, location information, capability level information, service requirement information, or coverage requirement information of the second device.

Optionally, after performing information transmission according to the third information, the method further includes:
receiving an initial access signal transmitted by the first device through an access point in the access point set; and
transmitting a random access signal to the first device according to the initial access signal;
wherein the access point set is determined by the first device according to the third information.

Optionally, frequency and/or time of the initial access signal are associated with the request signal.

Optionally, the access point information is access point information corresponding to a first reference signal;
wherein the first reference signal is a reference signal that satisfies a second condition among all reference signals detected by the second device.

Optionally, the performing information transmission according to the third information, includes:
performing the information transmission according to the third information through a first connection;
wherein the first connection refers to a connection established through a first manner, the first manner includes at least one of a first access technology or a first spectrum.

One embodiment of the present disclosure further provides an information processing apparatus, applied to a first device, including:
a first obtaining unit configured to obtain access point information; wherein the access point information includes access point information detected by a second device, and/or access point information obtained based on monitoring a request signal transmitted by the second device;
a first determining unit configured to determine an access point set corresponding to the second device according to the access point information.

Optionally, the obtaining access point information includes:
controlling a candidate access point to transmit a reference signal; and
receiving the access point information transmitted by the second device after the second device detects the reference signal.

Optionally, the receiving the access point information transmitted by the second device after the second device detects the reference signal, includes:
receiving the access point information transmitted by the second device through an uplink signal;
wherein the uplink signal is obtained by the second device via modulation according to the access point information.

Optionally, the access point information is carried through a carrying item of the reference signal;
the carrying item includes at least one of time-frequency resource location, power, sequence or spatial characteristics.

Optionally, the access point information includes at least one of identifier information of the access point, cell identity information corresponding to the access point, or location information of the second device.

Optionally, when the access point information includes at least one of identifier information of the access point or cell identity information corresponding to the access point, the access point information further includes at least one of a measurement result of the second device on the reference signal corresponding to the access point information, or location information of the access point; the determining an access point set corresponding to the second device according to the access point information includes at least one of the following:
determining location information of the second device according to at least one of the identifier information of the access point or the cell identity information, and the measurement result; determining a candidate access point located in a first target area based on the location information of the second device; determining an element of the access point set corresponding to the second device according to the determined candidate access point; or,
determining, based on at least one of the identifier information of the access point or the cell identity information, and the measurement result, a candidate access point whose signal quality meets a first condition; determining an element of the access point set corresponding to the second device according to the determined candidate access point; or,
determining, based on at least one of the identifier information of the access point or cell identity information, and the location information of the access point, a candidate access point located in a second target area; determining an element of the access point set corresponding to the second device based on the determined candidate access point.

Optionally, when the access point information includes location information of the second device, the determining an access point set corresponding to the second device according to the access point information, includes:
according to the location information of the second device, determining a candidate access point located in a third target area;
determining an element of the access point set corresponding to the second device based on the determined candidate access point.

Optionally, the determining an element of the access point set corresponding to the second device based on the determined candidate access point, includes:
obtaining service information of the determined candidate access point;
obtaining the element of the access point set corresponding to the second device according to the service information of the determined candidate access point;
wherein the service information of the determined candidate access point includes at least one of the following:
   a current resource occupancy rate of the determined candidate access point;
   a current traffic amount of the determined candidate access point.

Optionally, the obtaining access point information includes:
controlling a candidate access point to monitor a request signal transmitted by the second device; and
obtaining the access point information based on a monitoring result of the candidate access point.

Optionally, the apparatus further includes:
a first sending unit configured to, before obtaining the access point information, transmit resource configuration information for the request signal to the second device;
wherein the resource configuration information includes at least one of: time-frequency resource location, sequence or transmission power.

Optionally, the access point information includes at least one of identifier information, location information, capability level information, service requirement information, or coverage requirement information of the second device carried by the request signal; and/or,
the access point information further includes: location information of the second device determined according to first information of the request signal; wherein the first information includes at least one of signal strength, arrival time difference or arrival angle.

Optionally, the candidate access point is determined based on the location information of the second device, or determined based on a fourth target area determined by the first device.

Optionally, the determining an access point set corresponding to the second device according to the access point information, includes:
determining the access point set corresponding to the second device according to the access point information and service information of other access point;
wherein other access point is an access point other than the access point corresponding to the access point information;
the service information of the other access point includes at least one of the following:
   a current resource occupancy ratio of other access point;
   a current traffic amount of other access point.

Optionally, the apparatus further includes:
a second sending unit configured to, after determining an access point set corresponding to the second device according to the access point information, transmit an initial access signal through an access point in the access point set;
a first receiving unit configured to receive a random access signal transmitted by the second device according to the initial access signal.

Optionally, frequency and/or time of the initial access signal are associated with the request signal.

Optionally, the access point information is access point information corresponding to a first reference signal;
wherein the first reference signal is a reference signal that satisfies a second condition among all reference signals detected by the second device.

Optionally, the obtaining access point information includes:
obtaining the access point information through a first connection;
wherein the first connection refers to a connection established through a first manner, the first manner includes at least one of a first access technology or a first spectrum.

One embodiment of the present disclosure further provides an information processing apparatus, applied to a second device, including:
a second obtaining unit configured to obtain third information; wherein the third information includes part or all of access point information detected by a second device, and/or information carried in a request signal to be transmitted by the second device;
a first transmission unit configured to perform information transmission according to the third information; wherein the third information is used to determine an access point set corresponding to the second device.

Optionally, the obtaining the third information includes:
detecting a reference signal transmitted by a candidate access point;
determining the access point information based on part or all of detected reference signals;
wherein the performing information transmission according to the third information includes:
   transmitting the access point information to the first device.

Optionally, the transmitting the access point information to the first device, includes:
transmitting the access point information to the first device through an uplink signal;
wherein the uplink signal is obtained by the second device via modulation according to the access point information.

Optionally, the access point information is carried through a carrying item of the reference signal;
the carrying item includes at least one of time-frequency resource location, power, sequence or spatial characteristics.

Optionally, the access point information includes at least one of identifier information of the access point, cell identity information corresponding to the access point, or location information of the second device.

Optionally, when the access point information includes at least one of identifier information of the access point or cell identity information corresponding to the access point, the access point information further includes at least one of a measurement result of the second device on the reference signal corresponding to the access point information, or location information of the access point.

Optionally, the obtaining the third information includes:
determining information carried by a to-be-transmitted request signal;
wherein the performing information transmission according to the third information includes:
   transmitting the request signal according to the information carried by the request signal.

Optionally, the apparatus includes:
a third obtaining unit configured to, before transmitting the request signal according to the information carried by the request signal, obtain resource configuration information for the request signal;
wherein the transmitting the request signal according to the information carried by the request signal, includes:
   transmitting the request signal according to the resource configuration information and the information carried by the request signal;
   wherein the resource configuration information includes at least one of: time-frequency resource location, sequence or transmission power.

Optionally, the obtaining resource configuration information for the request signal includes:
receiving the resource configuration information for the request signal transmitted by a first device; or
obtaining pre-agreed resource configuration information for the request signal.

Optionally, the information carried by the request signal includes at least one of identifier information, location information, capability level information, service requirement information, or coverage requirement information of the second device.

Optionally, the apparatus further includes:
a second receiving unit configured to, after performing information transmission according to the third information, receive an initial access signal transmitted by the first device through an access point in the access point set; and
a third sending unit configured to transmit a random access signal to the first device according to the initial access signal;
wherein the access point set is determined by the first device according to the third information.

Optionally, frequency and/or time of the initial access signal are associated with the request signal.

Optionally, the access point information is access point information corresponding to a first reference signal;
wherein the first reference signal is a reference signal that satisfies a second condition among all reference signals detected by the second device.

Optionally, the performing information transmission according to the third information, includes:
performing the information transmission according to the third information through a first connection;
wherein the first connection refers to a connection established through a first manner, the first manner includes at least one of a first access technology or a first spectrum.

One embodiment of the present disclosure further provides a processor-readable storage medium, including: a computer program stored thereon; wherein the computer program is used to cause a processor to perform the information processing method on the first device; or,
the computer program is used to cause the processor to perform the information processing method on the second device.

In the above solutions, in the information processing method, by obtaining access point information, where the access point information includes access point information detected by the second device and/or access point information obtained based on monitoring a request signal transmitted by the second device; and by determining an access point set corresponding to the second device according to the access point information, this enables setting a suitable access point set for the second device according to the access point information, thereby forming a dedicated network coverage for the second device, which can avoid the problem of fixed cell division and well solves the problem of fixed cell division in the information processing solution for network coverage in the related art.

### BRIEF DESCRIPTION OF THE DRAWINGS

FIG. 1 is a schematic diagram showing architecture of a wireless communication system according to an embodiment of the present disclosure;
FIG. 2 is a first schematic flowchart of an information processing method according to an embodiment of the present disclosure;
FIG. 3 is a second schematic flowchart of an information processing method according to an embodiment of the present disclosure;
FIG. 4 is a schematic diagram of TRP deployment in the network according to an embodiment of the present disclosure;
FIG. 5 is a first schematic diagram of an information processing device according to an embodiment of the present disclosure;
FIG. 6 is a second schematic diagram of an information processing device according to an embodiment of the present disclosure;
FIG. 7 is a first schematic diagram of an information processing apparatus according to an embodiment of the present disclosure; and
FIG. 8 is a second schematic diagram of an information processing apparatus according to an embodiment of the present disclosure.

### DETAILED DESCRIPTION

The technical solutions in the embodiments of the present disclosure will be described hereinafter in a clear and complete manner in conjunction with the accompanying drawings of the embodiments of the present disclosure. Obviously, the following embodiments are merely a part of, rather than all of, the embodiments of the present disclosure, and based on these embodiments, a person skilled in the art may obtain the other embodiments, which also fall within the scope of the present disclosure.

The terms "and/or" in the embodiments of the present disclosure are used to describe association relationship between associated objects, and indicate that there may be three relationships, for example, A and/or B means there are three situations, i.e., there is A alone, there are both of A and B, or, there is B alone. The character "/" generally means that relationship between associated objects before and after the character "/" is "or".

The term "plurality" in the embodiments of the present disclosure means two or more, and other quantifiers are similar.

It is to be noted here that the technical solution of the embodiment of the present disclosure may be applied to various systems, especially a 5G system. For example, the applicable system may be Global System of Mobile communication (GSM), Code Division Multiple Access (CDMA) system, Wideband Code Division Multiple Access (WCDMA) General Packet Radio Service (GPRS) system, Long Term Evolution (LTE) system, LTE Frequency Division Duplexing (FDD) system, LTE Time Division Duplexing (TDD) system, Long Term Evolution Advanced (LTE-A) system, Universal Mobile Telecommunication System (UMTS), Worldwide Interoperability for Microwave Access (WiMAX) system, or 5th-Generation (5G) New Radio (NR) system. Each of these systems includes a terminal device and a network device. Each system further includes a core network part, e.g., an Evolved Packet System (EPS) or 5G system (5GS).

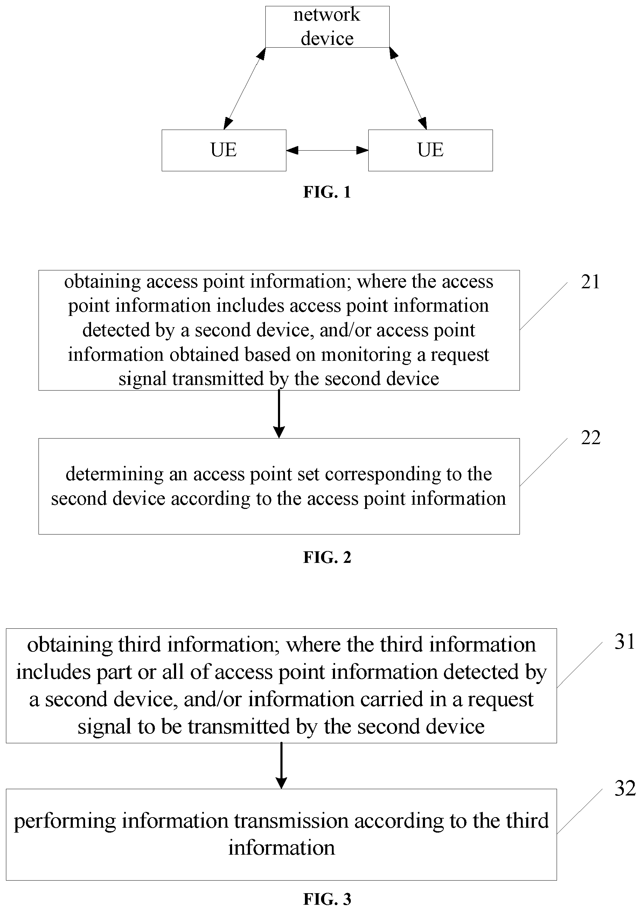

FIG. 1 is a schematic diagram of a wireless communication system applicable to an embodiment of the present disclosure. The wireless communication system includes a terminal device and a network device. The above first device can be implemented as a network device (which can also be called a network-side device), and the second device can be implemented as a terminal device (which can also be referred to as a terminal), but is not limited to this. For example, the second device can also be implemented as a network node.

The terminal device involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as User Equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, a Personal Digital Assistant (PDA). In addition, the wireless terminal device may also be called as system, subscriber unit, subscriber station, mobile station, mobile, remote station, access point, remote terminal, access terminal, user terminal, user agent or user device, which will not be particularly defined herein.

The network device involved in the embodiments of the present disclosure may be a base station which includes a plurality of cells providing services for the terminal device. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the GSM or CDMA system, a NodeB in the WCDMA system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

Multi Input Multi Output (MIMO) transmission is performed between the network device and the terminal device each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

In view of the above, embodiments of the present disclosure provide an information processing method, apparatus and device, which can solve the problem of fixed cell division in information processing solutions for network coverage in related art. The method, apparatus and the device are based on the same application concept. Since the method, apparatus and the device solve the problem in a similar principle, implementation of the method, apparatus and device can refer to each other, and the repeated parts will not be repeated.

One embodiment of the present disclosure provides an information processing method applied to a first device, as shown in FIG. 2, including:
Step 21: obtaining access point information; where the access point information includes access point information detected by a second device, and/or access point information obtained based on monitoring a request signal transmitted by the second device;
Step 22: determining an access point set corresponding to the second device according to the access point information.

The first device can be implemented as a network device; and the access point can be a transmission/reception point (TRP), or a UE, etc. Regarding the "an access point set corresponding to the second device", it may be an access point set corresponding to the second device, which is determined based on the access point information detected by the second device and/or access point information obtained based on monitoring the request signal transmitted by the second device; where the second device is not limited to what device it is; any device can determine an access point set according to this solution, for example, a newly connected network device can also use this solution to determine a surrounding access point set, which is not limited here.

In the information processing method according to the embodiment of the present disclosure, by obtaining access point information, where the access point information includes access point information detected by the second device and/or access point information obtained based on monitoring a request signal transmitted by the second device; and by determining an access point set corresponding to the second device according to the access point information, this enables setting a suitable access point set for the second device according to the access point information, thereby forming a dedicated network coverage for the second device, which can avoid the problem of fixed cell division and well solves the problem of fixed cell division in the information processing solution for network coverage in the related art.

Regarding the obtaining access point information, it includes two examples: obtaining an active manner and obtaining in a passive manner, which will be described hereinafter, respectively.

### Regarding obtaining an active manner

The obtaining access point information includes: controlling a candidate access point to transmit a reference signal; and receiving an access point information transmitted by the second device after the second device detects the reference signal.

In this way, the first device side can obtain access point information in an active manner. Regarding "a candidate access point transmitting a reference signal", it can be transmitted repeatedly according to a certain period, or transmitted once (non-periodic transmission), or transmitted semi-persistently, which is not limited here. Specific examples are as follows.

The first device takes a network device as an example; the second device takes UE as an example; and the access point takes a transmission/reception point (TRP) as an example. Regarding the network active transmission solution (corresponding to the above solution of the second device detecting the reference signal), it includes:
A1. TRP transmits a reference signal (TRP-RS). TRP-RS can be transmitted repeatedly according to a certain period, or transmitted once (non-periodic transmission), or transmitted semi-persistently. Semi-persistent transmission means that transmission of TRP-RS can be turned on or off; when turning on, it will be transmitted repeatedly according to a certain period; when turning off, it will not be transmitted.

The TRP for transmitting TRP-RS is controlled and selected by the network device (such as CU and/or DU). In a certain area, all TRPs transmit TRP-RS, or some TRPs are selected to transmit TRP-RS, which is not limited here.

A2. The UE detects TRP-RS. After the UE successfully detects at least one TRP-RS, the UE obtains a corresponding first identifier (corresponding to the above obtaining third information; where the third information includes the access point information detected by the second device). If the UE can detect multiple TRP-RSs, the UE can obtain multiple first identifiers.

A3. The UE reports one or more detected first identifiers to the network device (corresponding to the above transmitting the access point information to the first device). The UE may report the first identifier to the network device through an uplink signal and/or channel transmitted by the UE.
(a) For example, if the UE detects N TRP-RSs and the first identifiers are recorded as ID#0, ID#1, ..., ID#N-1, the UE can report M first identifiers among them to the network device, M≤N, which may specifically include that: the UE reports, to the network device, first identifiers carried by M TRP-RSs that meet a certain condition (corresponding to the above second condition) such as received signal quality greater than a certain threshold, among the N TRP-RSs.
(b) M first identifiers may be carried in an uplink channel transmitted by the UE.

In the embodiment of the present disclosure, the receiving the access point information transmitted by the second device after detecting the reference signal includes: receiving the access point information transmitted by the second device through an uplink signal; where the uplink signal is obtained by the second device via modulation according to the access point information. Based on the above example, specifically,
the M first identifiers may be used to modulate the uplink signal transmitted by the UE (corresponding to that the uplink signal is obtained by the second device via modulation according to the access point information), for example, selecting time-frequency resource for uplink transmission, sequence for uplink transmission, power and beam for uplink transmission, etc.

This allows for more accurate transmission of access point information. Regarding modulation, a specific example includes: selecting time-frequency resource for uplink transmission, sequence for uplink transmission, power and beam for uplink transmission, etc.

The access point information is carried through a carrying item of the reference signal. The carrying item includes at least one of time-frequency resource location, power, sequence or spatial characteristics.

This enables accurate transmission of access point information. Based on the above example, for instance, the first identifier can be carried by one or more of the time-frequency resource location of the TRP-RS (corresponding to the time-frequency resource location of the above reference signal), power, sequence, spatial characteristics, etc., which are not limited here. Carrying by time-frequency resource location, power, sequence and/or spatial characteristics means that different time-frequency resource locations, powers, sequences and/or spatial characteristics are mapped to different TRP-RS, but it is not limited to this.

In the embodiment of the present disclosure, the access point information includes at least one of identifier information of the access point, cell identity information corresponding to the access point, or location information of the second device.

This enables identification of access points in multiple ways. Based on the above example, for instance, the TRP-RS carries at least a first identifier (corresponding to the above access point information). The first identifier may be the identifier information of the TRP (corresponding to the identifier information of the above access point), such as TRP-ID, which can be used to uniquely identify the TRP in a certain area (such as the world, nationwide, etc.). The first identifier may also be a cell identity (Cell ID, which is corresponding to the above cell identity information corresponding to the access point), etc.

The reported information may further include UE's measurement result of TRP-RS (corresponding to s measurement result of the second device on the reference signal corresponding to the access point information), such as reference signal received power (RSRP).

Regarding "determining an access point set corresponding to the second device based on the access point information", the following two examples are provided.

In a first example, when the access point information includes at least one of identifier information of the access point or cell identity information corresponding to the access point, the access point information further includes at least one of the measurement result of the second device on the reference signal corresponding to the access point information, or the location information of the access point. The determining an access point set corresponding to the second device based on the access point information includes at least one of the following: determining location information of the second device according to at least one of the identifier information of the access point or the cell identity information, and the measurement result; determining a candidate access point located in a first target area based on the location information of the second device; determining an element of the access point set corresponding to the second device according to the determined candidate access point; or, determining, based on at least one of the identifier information or the cell identity information of the access point and the measurement result, a candidate access point whose signal quality meets a first condition; determining an element of the access point set corresponding to the second device according to the determined candidate access point; or, determining, based on at least one of the identifier information or cell identity information of the access point and the location information of the access point, a candidate access point located in a second target area; determining, based on the determined candidate access point, an element of the access point set corresponding to the second device.

This allows determining an element to be added to the access point set, by area or signal quality. The "measurement result" may include reference signal received power, etc. The first condition may include that: the signal quality is greater than the threshold value, but is not limited to this. In addition, in the embodiment of the present disclosure, it may also be that when the access point information includes at least one of the identifier information of the access point or the cell identity information corresponding to the access point, the determining an access point set corresponding to the second device based on the access point information, includes: determining a candidate access point that satisfies at least one of a current resource occupancy rate condition or a current traffic condition according to at least one of the identifier information of the access point or the cell identity information; and determining an element of the access point set corresponding to the second device according to the determined candidate access point.

In a second example, when the access point information includes location information of the second device, the determining an access point set corresponding to the second device based on the access point information, includes: according to the location information of the second device, determining a candidate access point located in a third target area; determining an element of the access point set corresponding to the second device based on the determined candidate access point.

This allows determining an element to be added to the access point set by region.

Applicable to the above first and second examples, in the embodiment of the present disclosure, determining the element of the access point set corresponding to the second device according to the determined candidate access point includes: obtaining service information of the determined candidate access point; obtaining the element of the access point set corresponding to the second device according to the determined service information of the candidate access point; where the determined service information of the candidate access point includes at least one of the following: a current resource occupancy rate of the determined candidate access point; a current traffic amount of the determined candidate access point.

In this way, determination of the access point set can be realized in a diversified manner. In combination with the above first and second examples, based on the above examples, for instance,

A4. The network device determines a TRP set A (corresponding to the access point set corresponding to the second device) based on a measurement reporting result (corresponding to the above access point information) of the UE. The TRP set A may include all or part of TRPs corresponding to first identifiers reported by the UE.
(a) For example, if the UE reports location information (corresponding to the above location information of the second device), the network device can classify TRPs within a certain range of the UE's location into the TRP set A, for example, TRPs within a radius of 100m with the UE's location as the center are classified into the TRP set A.
(b) For example, the network device estimates the location of the UE based on RSRP (corresponding to reference signal received power (RSRP) of the reference signal corresponding to the above access point information) of each TRP-RS in the information reported by the UE, and then determines a range of the TRP set A.
(c) For example, the network device selects K TRPs with the lowest current resource occupancy rate (corresponding to the current resource occupancy rate of the access point corresponding to the above access point information) from the TRPs corresponding to the first identifiers reported by the UE to form a TRP set A.
(d) For example, the network device determines the TRP set A by comprehensively analyzing the traffic amount (including the current traffic amount) of each TRP (including the TRP corresponding to the first information reported by the UE and/or the TRP determined by the network itself), the location of the UE and the information reported by the UE (including or not including the location of the UE).

In this embodiment of the present disclosure, the access point information is access point information corresponding to the first reference signal; where the first reference signal is a reference signal that satisfies a second condition among all reference signals detected by the second device.

This can ensure that the second device is provided with an access point that is optimized as much as possible. The second condition may include: signal quality is greater than a threshold value, but is not limited to this. In combination with the above first and second examples, based on the above examples, specifically, the network device selects K TRPs with the strongest RSRP (from the TRPs corresponding to the first identifiers reported by the UE) to form the TRP set A.

### Regarding obtaining in a passive manner

In the embodiment of the present disclosure, the obtaining access point information includes: controlling a candidate access point to monitor a request signal transmitted by the second device; and obtaining the access point information based on a monitoring result of the candidate access point.

In this way, the first device side can obtain the access point information in a passive manner. Specific examples are as follows.

The first device takes a network device as an example; the second device takes UE as an example; and the access point takes a transmission/reception point (TRP) as an example. Regarding the network passive reception solution (corresponding to the above solution of the second device sending a request signal), it includes:
B1. The network device controls the TRP to monitor a request signal.
(a) The network device can obtain location information of the UE and control a group of TRPs (such as TRPs within an area corresponding to the location information) to monitor the request signal based on the location information. The location information may be reported by the UE to the network device through a second connection, or may be obtained by prediction by the network device based on stored historical information, which is not limited here.
(b) The network device can control all TRPs in a certain area (such as all TRPs connected to the network) to monitor the request signal (there is no a priori information at this time, such as the location information of the UE).

Further, before obtaining the access point information, the method further includes: transmitting resource configuration information for the request signal to the second device; where the resource configuration information includes at least one of: time-frequency resource location, sequence or transmission power.

This can facilitate the second device to accurately transmit the request signal. Based on the above examples, specifically,
B2. The UE determines the resource configuration information of the request signal (corresponding to the above obtaining resource configuration information for the request signal). The resource configuration information may include one or more of time-frequency resource location, sequence, transmission power, etc.
   (a) The UE may obtain resource configuration information from the network through the second connection (corresponding to the above receiving resource configuration information for the request signal transmitted by the first device). The second connection may refer to a connection established between the network and the UE through a preset radio access technology (RAT; corresponding to the above first connection), a preset spectrum (corresponding to the above first spectrum), etc. The preset radio access technology may include 4G LTE, 5G NR, WiFi, etc., which are not limited here.
   (b) One or more of the resource configuration information is an agreed value (corresponding to the above obtaining pre-agreed resource configuration information for the request signal), such as frequency of the request signal is at an agreed frequency, or a sequence of the request signal is an agreed sequence. The agreed manner includes definition in an agreement or being fixed in the software and hardware implementation, which is not limited here.
B3. The UE sends a request signal according to the resource configuration information. The request signal can be a sequence, or can include sequence and data packets.
   (a) The request signal can establish a connection with a frequency point that has not yet established a connection and is transmitted on this frequency point.
   (b) The request signal can also be transmitted through an already established connection, such as the above second connection.

The access point information includes at least one of identifier information, location information, capability level information, service requirement information, or coverage requirement information of the second device carried by the request signal; and/or, the access point information further includes: location information of the second device determined according to first information of the request signal. The first information includes at least one of signal strength, arrival time difference or arrival angle. Based on the above examples, specifically, the information carried by the request signal may include: UE identifier information, UE location information, UE capability level, UE service requirement, UE coverage requirement (corresponding to the identifier information, location information, capability level information, service requirement information, coverage requirement information of the second device in turn), etc.

(B4) TRP monitors the request signal. If one or more TRPs receive the request signal, the network device parses information carried in the request signal (corresponding to the above obtaining access point information based on the monitoring result of the candidate access point). Of course, the analysis can also be performed by TRP, which is not limited here.

(a) The information carried in the request signal is obtained, such as UE identifier information, UE location information, UE capability level, UE service requirement, UE coverage requirement, etc.

(b) In some implementations, the network device can also calculate the location of the UE transmitting the request signal, based on signal strengths, arrival time difference, arrival angles, etc. (corresponding to the above first information) of the request signals received by multiple TRPs, thereby obtaining the location information of the UE (corresponding to the location information of the above second device).

In this way, determination of the access point set can be realized in a diversified manner. One specific example includes: determining at least one of the location information, capability level information, coverage requirement information, or service requirement information of the second device; determining an access point (including candidate access points) located in a fifth target area based on the location information); determining an element of the access point set corresponding to the second device based on the determined candidate access point; or according to at least one of the capability level information, coverage requirement information or service requirement information, determining an access point (including the candidate access point) that meets at least one of the capability level requirement, coverage requirement or service requirement; according to the determined candidate access point, determining an element of the access point set corresponding to the second device; which is not limited here.

Correspondingly, determining the access point set corresponding to the second device according to the access point information includes: according to at least one of the identifier information, location information, capability level information, coverage requirement information or service requirement information of the second device, determining the access point set corresponding to the second device.

In this way, more suitable access points can be provided for the second device as much as possible; for example, for the second device with high service level requirement, the access point set can include more access points with stronger capabilities. The access point set can also be determined based on the location of the second device, for example, access points within a certain range near the second device are configured into the access point set. The access point set can also be determined based on signal strength, for example, access points whose received request signal strength is higher than a certain threshold are configured into the access point set. Based on the above examples, for instance,
B5. The network device determines a TRP set A (corresponding to the access point set corresponding to the second device) according to information obtained based on the request signal (corresponding to the above access point information). The TRP set A can be determined according to the UE's location, or according to UE coverage requirement, UE service requirement, etc. For example, for UEs with high service level requirement, the TRP set A may include more TRPs with stronger capabilities. The TRP set A can also be determined based on the location of the UE, for example, TRPs within a certain range near the UE are configured into the TRP set A. The TRP set A can also be determined based on signal strength, for example, TRPs whose received request signal strength is higher than a certain threshold are configured into the TRP set A.

Content that applies to both examples above includes the following:
The candidate access point is determined based on the location information of the second device, or determined based on a fourth target area determined by the first device.

This will provide as many suitable access points as possible for the second device.

In the embodiment of the present disclosure, the determining the access point set corresponding to the second device according to the access point information includes: determining the access point set corresponding to the second device according to the access point information and service information of other access point; where other access point are an access point other than the access point corresponding to the access point information; the service information of the other access point includes at least one of the following: current resource occupancy ratio of other access point; current traffic amount of other access point.

This can further provide more suitable access points for the second device. Based on the above examples of the active mode and/or the passive mode, for instance, the TRP set A may further include other TRPs (corresponding to the above other access points) other than the TRP corresponding to the first identifier reported by the UE.

Further, after determining the access point set corresponding to the second device according to the access point information, the method further includes: transmitting an initial access signal through the access point in the access point set; receiving a random access signal transmitted by the second device according to the initial access signal.

This enables access of the second device. Bases on the above example of active mode, for instance,
A5. The network device sends the initial access signal through the TRP in the TRP set A (corresponding to the above transmitting the initial access signal through the access point in the access point set). The initial access signal can carry system information and cell configuration information. The cell configuration information may include a cell identity (ID), and the system information may include random access configuration information, etc. The initial access signal may include synchronization signal and/or broadcast channel.
(a) The configuration information of the initial access signal can be configured by the network to the UE. For example, the time-frequency resource location, sequence, power, etc. of the initial access signal can be configured by the network to the UE. The UE can receive the initial access signal according to the configuration information.
(b) The configuration information of the initial access signal is not configured to the UE, then the UE can search for the initial access signal, including searching for time-frequency resource location, performing blind detection of sequences, etc. At this point, the network device can transmit indication information to the UE to instruct the UE to start the search process for the initial access signal.
   (i) The indication information can be transmitted to the UE through the above second connection, such as through high-layer signaling or physical layer signaling.

A6. The UE receives the initial access signal, obtains system information and cell configuration information, and initiates a random access process according to the random access configuration information in the system information (corresponding to the above transmitting a random access signal to the first device according to the initial access signal).
(a) The random access configuration information in the system information may include a frequency, bandwidth, period and other information of the random access resource, and may also include sequence and power control information of the random access signal.
(b) The UE can transmit a random access signal according to the random access configuration information.

Bases on the above example of active mode, for instance,
B6. The network device transmits an initial access signal through the TRP in the TRP set A (corresponding to the above transmitting the initial access signal through the access point in the access point set). The initial access signal can carry system information and cell configuration information. The cell configuration information may include a cell identity (ID), and the system information may include random access configuration information, etc. The initial access signal may include synchronization signal and/or broadcast channel. The initial access signal and the request signal can be at the same frequency or different frequencies.
(a) The configuration information of the initial access signal can be configured by the network to the UE. For example, the time-frequency resource location, sequence, power, etc. of the initial access signal can be configured by the network to the UE. The UE can receive the initial access signal according to the configuration information.
(b) The configuration information of the initial access signal is not configured to the UE, and then the UE can search for the initial access signal, including searching for time-frequency resource locations, performing blind detection of sequences, etc. At this point, the network device can send indication information to the UE to instruct the UE to start the search process for the initial access signal.
   (i) The indication information can be transmitted to the UE through the above second connection, such as through high-layer signaling or physical layer signaling.

B7. The UE receives the initial access signal, obtains system information and cell configuration information, and initiates a random access process according to the random access configuration information in the system information (corresponding to the above transmitting a random access signal to the first device according to the initial access signal)
(a) The random access configuration information in the system information may include a frequency, bandwidth, period and other information of the random access resource, and may also include a sequence and power control information of the random access signal.
(b) The UE can transmit a random access signal according to the random access configuration information.

Regarding the above obtaining in the passive mode, the frequency and/or time of the initial access signal are associated with the request signal.

This makes it easier to transmit and receive initial access signals. "Being associated with the request signal" can be understood as: being bound to the request signal, but is not limited to this. Bases on the above example of passive mode, for instance,
(ii) The frequency and time of the initial access signal can be bound to the request signal (corresponding to that the frequency and/or time of the above initial access signal is associated with the request signal), for example, bound to the sequence of the request signal. For example, if the request signal transmitted by the UE uses a sequence 1, the initial access signal is transmitted at a frequency 1; if a sequence 2 is used, the initial access signal is transmitted at a frequency 2.

In the embodiment of the present disclosure, the obtaining access point information includes: obtaining access point information through a first connection; where the first connection refers to a connection established through a first manner, the first manner includes at least one of a first access technology or a first spectrum.

This allows for transmitting the access point information in multiple ways. The first access technology may be 4G LTE, 5G NR, WiFi, etc., which is not limited here. Based on the above active and/or passive examples, for instance,

the reporting of the first identifier can be completed through the second connection. The second connection may refer to a connection established between the network and the UE through a preset radio access technology (RAT; corresponding to the above first connection), a preset spectrum (corresponding to the above first spectrum), etc. The preset radio access technology may include 4G LTE, 5G NR, WiFi, etc., which are not limited here.

One embodiment of the present disclosure further provides an information processing method, applied to a second device, as shown in FIG. 3, including:
Step 31: obtaining third information; where the third information includes part or all of access point information detected by a second device, and/or information carried in a request signal to be transmitted by the second device;
Step 32: performing information transmission according to the third information.

The third information is used to determine an access point set corresponding to the second device. The access point information may be carried in a reference signal transmitted by the access point, but is not limited to this. Regarding "performing information transmission according to the third information", it may include: transmitting at least part of the access point information according to the third information, but is not limited to this.

The access point may be a TRP, or a UE, etc. In the embodiment of the present disclosure, it is not limited to what the second device is; where the second device is not limited to what device it is; any device can determine an access point set according to this solution, for example, a newly connected network device can also use this solution to determine a surrounding access point set, which is not limited here.

In the information processing method according to the embodiment of the present disclosure, by obtaining third information, where the third information includes part or all of access point information detected by a second device, and/or information carried in a request signal to be transmitted by the second device; and by performing information transmission according to the third information, this enables setting a suitable access point set for the second device according to the access point information, thereby forming a dedicated network coverage for the second device, which can avoid the problem of fixed cell division and well solves the problem of fixed cell division in the information processing solution for network coverage in the related art.

Regarding the obtaining access point information by a first device, it includes two examples: obtaining an active manner and obtaining in a passive manner, which will be described hereinafter, respectively.

### Regarding obtaining an active manner

The obtaining the third information includes: detecting a reference signal transmitted by a candidate access point; determining the access point information based on part or all of detected reference signals. The performing information transmission according to the third information includes: transmitting the access point information to the first device.

In this way, the first device is supported to obtain access point information in an active manner. The first device can be implemented as a network device, which is not limited here. Regarding "a reference signal transmitted by a candidate access point", it can be transmitted repeatedly according to a certain period, or transmitted once (non-periodic transmission), or transmitted semi-persistently, which is not limited here.

In the embodiment of the present disclosure, the transmitting the access point information to the first device includes: transmitting the access point information to the first device through an uplink signal; where the uplink signal is obtained by the second device via modulation according to the access point information.

This allows for more accurate transmission of access point information. Regarding modulation, a specific example includes: selecting time-frequency resource for uplink transmission, sequence for uplink transmission, power and beam for uplink transmission, etc.

The access point information is carried through a carrying item of the reference signal. The carrying item includes at least one of time-frequency resource location, power, sequence or spatial characteristics.

This enables accurate transmission of access point information.

In the embodiment of the present disclosure, the access point information includes at least one of identifier information of the access point, cell identity information corresponding to the access point, or location information of the second device.

This enables identification of access points in multiple ways.

When the access point information includes at least one of identifier information of the access point or cell identity information corresponding to the access point, the access point information further includes at least one of a measurement result of the second device on the reference signal corresponding to the access point information, or the location information of the access point.

This can facilitate the first device to determine an element to be added to the access point set in multiple ways. The "measurement result" may include reference signal received power, etc.

In the embodiment of the present disclosure, the access point information is access point information corresponding to a first reference signal; where the first reference signal is a reference signal that satisfies a second condition among all reference signals detected by the second device.

This can ensure that the second device is provided with an access point that is optimized as much as possible. The second condition may include: signal quality is greater than a threshold value, but is not limited to this.

### Regarding obtaining in a passive manner

In the embodiment of the present disclosure, the obtaining the third information includes: determining information carried by a to-be-transmitted request signal. The performing information transmission according to the third information includes: according to the information carried by the request signal, transmitting the request signal.

In this way, the first device is supported to obtain the access point information in a passive manner.

Further, before transmitting the request signal according to the information carried by the request signal, the method further includes: obtaining resource configuration information for the request signal. The transmitting the request signal according to the information carried by the request signal, includes: transmitting the request signal according to the resource configuration information and the information carried by the request signal; where the resource configuration information includes at least one of: time-frequency resource location, sequence or transmission power.

This allows accurately transmitting the request signal.

The obtaining the resource configuration information for the request signal includes: receiving the resource configuration information for the request signal transmitted by a first device; or obtaining pre-agreed resource configuration information for the request signal.

In this way, the resource configuration information of the request signal can be obtained in multiple ways. Regarding "obtaining pre-agreed resource configuration information for the request signal", for example, frequency of the request signal is at an agreed frequency, or a sequence of the request signal is an agreed sequence. The agreed manner includes definition in an agreement or being fixed in the software and hardware implementation, which is not limited here.

In this embodiment of the disclosure, the information carried by the request signal includes at least one of identifier information, location information, capability level information, service requirement information, or coverage requirement information of the second device.

In this way, the first device is supported to determine the access point set in a diversified manner.

Content that applies to both examples above includes the following:
The candidate access point is determined based on the location information of the second device, or determined based on a fourth target area determined by the first device.

This will provide as many suitable access points as possible for the second device.

Further, after performing information transmission according to the third information, the method further includes: receiving an initial access signal transmitted by the first device through an access point in the access point set; and transmitting a random access signal to the first device according to the initial access signal. The access point set is determined by the first device according to the third information.

This enables access of the second device.

Regarding the above obtaining in the passive mode, the frequency and/or time of the initial access signal are associated with the request signal.

This makes it easier to transmit and receive initial access signals. "Being associated with the request signal" can be understood as: being bound to the request signal, but is not limited to this.

In the embodiment of the present disclosure, the performing information transmission according to the third information includes: performing the information transmission according to the third information through a first connection; where the first connection refers to a connection established through a first manner, the first manner includes at least one of a first access technology or a first spectrum.

This allows for transmitting the information in multiple ways. The first access technology may be 4G LTE, 5G NR, WiFi, etc., which is not limited here.

The above solutions on both sides of the first device and the second device may refer to each other and will not be described again here.

From the above, in view of the above technical problems, the embodiment of the present disclosure provides an information processing method, which can be specifically implemented as a method for UE to access the network in a future distributed network architecture, mainly including: UE detecting a reference signals transmitted by the network (corresponding to the above that the second device detects the reference signal transmitted by the candidate access point), identifying TRP that meets a condition (that is, accessible) and reporting relevant information (corresponding to the above access point information) to the network device; or, UE transmitting a request signal, and the network device obtaining a TRP that satisfies the conditions (that is, accessible) after measurement; after that, the network device setting a suitable TRP set (corresponding to the above access point set) for the UE according to the UE's measurement result (that is, the access point information reported by the UE) or the network device's measurement result (corresponding to the above monitoring result), thereby forming a dedicated network coverage for the UE, which can avoid the problem of fixed cell division.

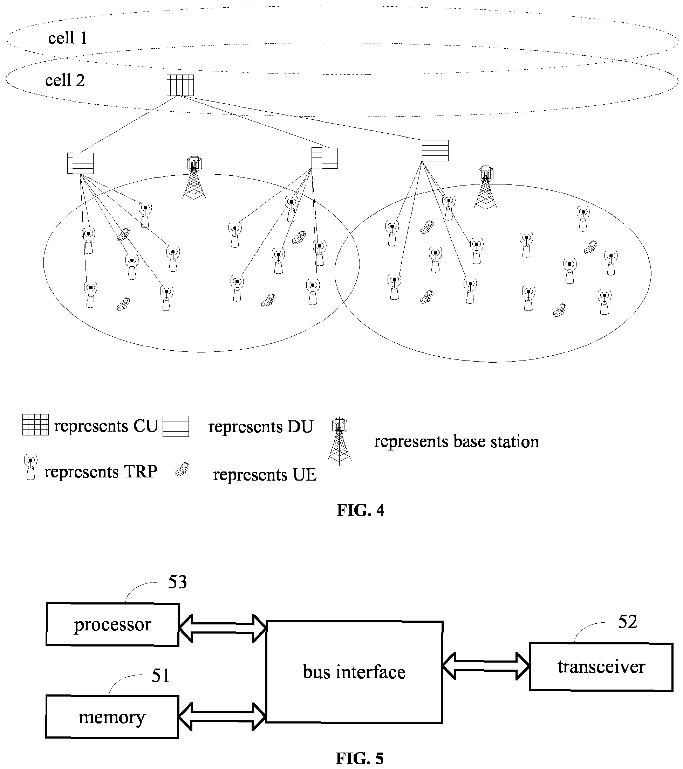

In this solution, the transmission/reception point (TRP) can be a network device used to implement signal transmitting and receiving with the UE. As shown in FIG. 4, there may be one or more TRPs in the network deployment. The TRP can be connected to the distributed unit (DU) through wired or wireless means. DU is connected to the centralized unit (CU). One DU can be connected to multiple TRPs, and one CU can be connected to multiple DUs.

In this solution, the access point (AP) is a device used to implement signal transmitting and receiving with the UE. The AP can be a TRP or a UE, etc., which is not limited here.

Based on the above, the solution provided in the embodiments of the present disclosure can well solve the problem of fixed cell division in the information processing solution for network coverage in the related art.

One embodiment of the present disclosure further provides an information processing device. The information processing device is a first device, which can be implemented as a network device. As shown in FIG. 5, the information processing device includes a memory 51, a transceiver 52 and a processor 53.

The memory 51 is used to store a computer program. The transceiver 52 is used to transmit and receive data under the control of the processor 53. The processor 53 is used to read the computer program in the memory 51 and perform the following operations:
obtaining access point information; where the access point information includes access point information detected by a second device, and/or access point information obtained based on monitoring a request signal transmitted by the second device;
determining an access point set corresponding to the second device according to the access point information.

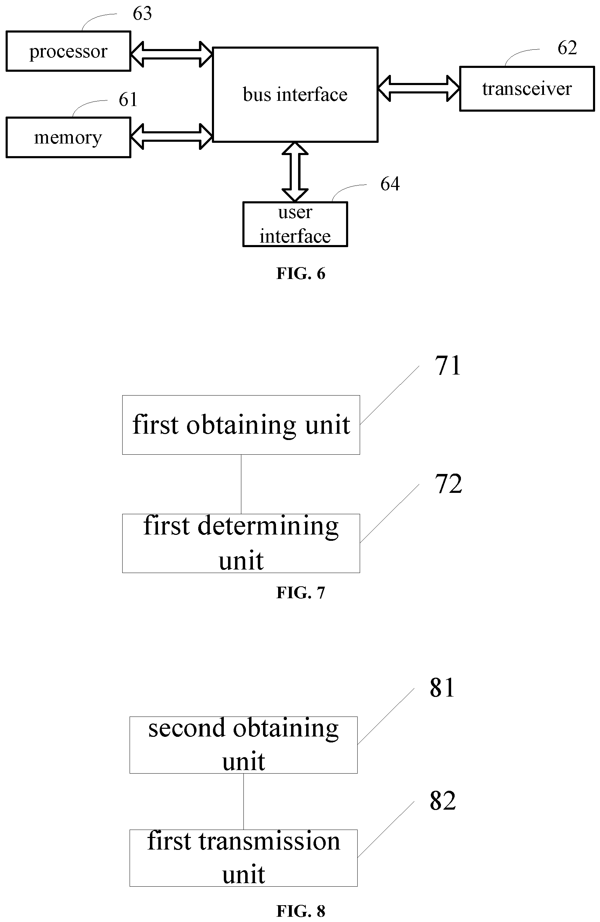

Of course, it is not excluded that the first device is implemented as a UE (referring to the structure of FIG. 6), which is not limited here.

The information processing device provided in the embodiment of the present disclosure obtains access point information, where the access point information includes access point information detected by the second device and/or access point information obtained based on monitoring a request signal transmitted by the second device; and determines an access point set corresponding to the second device according to the access point information, this enables setting a suitable access point set for the second device according to the access point information, thereby forming a dedicated network coverage for the second device, which can avoid the problem of fixed cell division and well solves the problem of fixed cell division in the information processing solution for network coverage in the related art.

Specifically, the transceiver 52 is used to receive and transmit data under the control of the processor 53.

In FIG. 5, a bus architecture may include any number of interconnected bus and bridge. Specifically, various circuits of one or more processors, which are represented by the processor 53, and one or more memories, which are represented by the memory 51, are linked together. The bus architecture may link various other circuits, such as a peripheral device, voltage regulator and a power management circuit together. These features are well known in this field; therefore, this disclosure does not make further description on these features. The bus interface provides an interface. The transceiver 52 may be multiple elements, including a transmitter and a receiver and provide units, which communicate with other devices on the transmission medium. The transmission medium includes wireless channels, wired channels, optical cables and other transmission medium. The processor 53 is responsible for managing the bus architecture and the normal processing. The memory 51 may be used to store data used by the processor 53 for performing operations.

The processor 53 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any of the methods provided in the embodiments of the present disclosure according to obtained executable instructions. The processor and the memory can also be physically separated.

The obtaining access point information, includes: controlling a candidate access point to transmit a reference signal; and receiving, through the transceiver, an access point information transmitted by the second device after the second device detects the reference signal.

In the embodiment of the present disclosure, the receiving the access point information transmitted by the second device after detecting the reference signal includes: receiving the access point information transmitted by the second device through an uplink signal; where the uplink signal is obtained by the second device via modulation according to the access point information.

The access point information is carried through a carrying item of the reference signal. The carrying item includes at least one of time-frequency resource location, power, sequence or spatial characteristics.

In the embodiment of the present disclosure, the access point information includes at least one of identifier information of the access point, cell identity information corresponding to the access point, or location information of the second device.

When the access point information includes at least one of identifier information of the access point or cell identity information corresponding to the access point, the access point information further includes at least one of a measurement result of the second device on the reference signal corresponding to the access point information, or the location information of the access point. The determining an access point set corresponding to the second device based on the access point information includes at least one of the following: determining location information of the second device according to at least one of the identifier information of the access point or the cell identity information, and the measurement result; determining a candidate access point located in a first target area based on the location information of the second device; determining an element of the access point set corresponding to the second device according to the determined candidate access point; or, determining, based on at least one of the identifier information or the cell identity information of the access point and the measurement result, a candidate access point whose signal quality meets a first condition; determining an element of the access point set corresponding to the second device according to the determined candidate access point; or, determining, based on at least one of the identifier information or cell identity information of the access point and the location information of the access point, a candidate access point located in a second target area; determining, based on the determined candidate access point, an element of the access point set corresponding to the second device.

In the embodiment of the present disclosure, when the access point information includes location information of the second device, the determining an access point set corresponding to the second device based on the access point information, includes: according to the location information of the second device, determining a candidate access point located in a third target area; determining an element of the access point set corresponding to the second device based on the determined candidate access point.

The determining the element of the access point set corresponding to the second device according to the determined candidate access point includes: obtaining service information of the determined candidate access point; obtaining the element of the access point set corresponding to the second device according to the determined service information of the candidate access point; where the determined service information of the candidate access point includes at least one of the following: a current resource occupancy rate of the determined candidate access point; a current traffic amount of the determined candidate access point.

In the embodiment of the present disclosure, the obtaining access point information includes: controlling a candidate access point to monitor a request signal transmitted by the second device; and obtaining the access point information based on a monitoring result of the candidate access point.

Further, the operation further includes: before obtaining the access point information, transmitting, through the transceiver, resource configuration information for the request signal to the second device; where the resource configuration information includes at least one of: time-frequency resource location, sequence or transmission power.

The access point information includes at least one of identifier information, location information, capability level information, service requirement information, or coverage requirement information of the second device carried by the request signal; and/or, the access point information further includes: location information of the second device determined according to first information of the request signal. The first information includes at least one of signal strength, arrival time difference or arrival angle.

In this embodiment of the present disclosure, the candidate access point is determined based on the location information of the second device, or determined based on a fourth target area determined by the first device.

The determining the access point set corresponding to the second device according to the access point information includes: determining the access point set corresponding to the second device according to the access point information and service information of other access point; where other access point are an access point other than the access point corresponding to the access point information; the service information of the other access point includes at least one of the following: current resource occupancy ratio of other access point; current traffic amount of other access point.

Further, the operation further includes: after determining the access point set corresponding to the second device according to the access point information, transmitting an initial access signal through the access point in the access point set; receiving, through the transceiver, a random access signal transmitted by the second device according to the initial access signal.

The frequency and/or time of the initial access signal are associated with the request signal.

In the embodiment of the present disclosure, the access point information is access point information corresponding to a first reference signal; where the first reference signal is a reference signal that satisfies a second condition among all reference signals detected by the second device.

The obtaining access point information includes: obtaining access point information through a first connection; where the first connection refers to a connection established through a first manner, the first manner includes at least one of a first access technology or a first spectrum.

It is to be noted here that the above device provided in the embodiment of the present disclosure can implement all the method steps implemented by the first device in the above method embodiment, and can achieve the same technical effect. The parts and beneficial effects of this embodiment that are the same as those in the method embodiment will not be described in detail here.

One embodiment of the present disclosure further provides an information processing device. The information processing device is a second device, which can be implemented as a UE. As shown in FIG. 6, the information processing device includes a memory 61, a transceiver 62 and a processor 63.

The memory 61 is used to store a computer program. The transceiver 62 is used to transmit and receive data under the control of the processor 63. The processor 63 is used to read the computer program in the memory 61 and perform the following operations:
obtaining third information; where the third information includes part or all of access point information detected by a second device, and/or information carried in a request signal to be transmitted by the second device;
performing through the transceiver 62, information transmission according to the third information, where the third information is used to determine the access point set corresponding to the second device.

Of course, it is not excluded that the first device is implemented as a UE (referring to the structure of FIG. 5), which is not limited here.

The information processing device according to the embodiment of the present disclosure, obtains third information, where the third information includes part or all of access point information detected by a second device, and/or information carried in a request signal to be transmitted by the second device; and performs information transmission according to the third information, this enables setting a suitable access point set for the second device according to the access point information, thereby forming a dedicated network coverage for the second device, which can avoid the problem of fixed cell division and well solves the problem of fixed cell division in the information processing solution for network coverage in the related art.

Specifically, the transceiver 62 is used to receive and transmit data under the control of the processor 63.

In FIG. 6, a bus architecture may include any number of interconnected bus and bridge. Specifically, various circuits of one or more processors, which are represented by the processor 63, and one or more memories, which are represented by the memory 61, are linked together. The bus architecture may link various other circuits, such as a peripheral device, voltage regulator and a power management circuit together. These features are well known in this field; therefore, this disclosure does not make further description on these features. The bus interface provides an interface. The transceiver 62 may be multiple elements, including a transmitter and a receiver and provide units, which communicate with other devices on the transmission medium. The transmission medium includes wireless channels, wired channels, optical cables and other transmission medium. For different UEs, a user interface 64 may be an interface that can be connected to external or internal devices. The connected devices include but are not limited to a small keyboard, a display, a speaker, a microphone, a joystick, etc.

The processor 63 is responsible for managing the bus architecture and the normal processing. The memory 61 may be used to store data used by the processor 53 for performing operations.

Optionally, the processor 63 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any of the methods provided in the embodiments of the present disclosure according to obtained executable instructions. The processor and the memory can also be physically separated.

The obtaining the third information includes: detecting a reference signal transmitted by a candidate access point; determining the access point information based on part or all of detected reference signals. The performing information transmission according to the third information includes: transmitting the access point information to the first device.

In the embodiment of the present disclosure, the transmitting the access point information to the first device includes: transmitting the access point information to the first device through an uplink signal; where the uplink signal is obtained by the second device via modulation according to the access point information.

The access point information is carried through a carrying item of the reference signal. The carrying item includes at least one of time-frequency resource location, power, sequence or spatial characteristics.

In the embodiment of the present disclosure, the access point information includes at least one of identifier information of the access point, cell identity information corresponding to the access point, or location information of the second device.

When the access point information includes at least one of identifier information of the access point or cell identity information corresponding to the access point, the access point information further includes at least one of a measurement result of the second device on the reference signal corresponding to the access point information, or the location information of the access point.

In the embodiment of the present disclosure, the obtaining the third information includes: determining information carried by a to-be-transmitted request signal. The performing information transmission according to the third information includes: according to the information carried by the request signal, transmitting the request signal.

Further, the operation further includes: before transmitting the request signal according to the information carried by the request signal, obtaining resource configuration information for the request signal. The transmitting the request signal according to the information carried by the request signal, includes: transmitting the request signal according to the resource configuration information and the information carried by the request signal; where the resource configuration information includes at least one of: time-frequency resource location, sequence or transmission power.

The obtaining the resource configuration information for the request signal includes: receiving the resource configuration information for the request signal transmitted by a first device; or obtaining pre-agreed resource configuration information for the request signal.

In this embodiment of the present disclosure, the information carried by the request signal includes at least one of identifier information, location information, capability level information, service requirement information, or coverage requirement information of the second device.

Further, the operation further includes: after performing information transmission according to the third information, receiving, the transceiver, an initial access signal transmitted by the first device through an access point in the access point set; and transmitting, the transceiver, a random access signal to the first device according to the initial access signal. The access point set is determined by the first device according to the third information.

The frequency and/or time of the initial access signal are associated with the request signal.

In the embodiment of the present disclosure, the access point information is access point information corresponding to a first reference signal; where the first reference signal is a reference signal that satisfies a second condition among all reference signals detected by the second device.

The performing information transmission according to the third information includes: performing the information transmission according to the third information through a first connection; where the first connection refers to a connection established through a first manner, the first manner includes at least one of a first access technology or a first spectrum.

It is to be noted here that the above device provided in the embodiment of the present disclosure can implement all the method steps implemented by the second device in the above method embodiment, and can achieve the same technical effect. The parts and beneficial effects of this embodiment that are the same as those in the method embodiment will not be described in detail here.

One embodiment of the present disclosure further provides an information processing apparatus applied to a first device, as shown in FIG. 7, including:
a first obtaining unit 71 used to obtain access point information; where the access point information includes access point information detected by a second device, and/or access point information obtained based on monitoring a request signal transmitted by the second device;
a first determining unit 72 used to determine an access point set corresponding to the second device according to the access point information.

The information processing apparatus provided in the embodiment of the present disclosure obtains access point information, where the access point information includes access point information detected by the second device and/or access point information obtained based on monitoring a request signal transmitted by the second device; and determines an access point set corresponding to the second device according to the access point information, this enables setting a suitable access point set for the second device according to the access point information, thereby forming a dedicated network coverage for the second device, which can avoid the problem of fixed cell division and well solves the problem of fixed cell division in the information processing solution for network coverage in the related art.

The obtaining access point information, includes: controlling a candidate access point to transmit a reference signal; and receiving, through the transceiver, an access point information transmitted by the second device after the second device detects the reference signal.

In the embodiment of the present disclosure, the receiving the access point information transmitted by the second device after detecting the reference signal includes: receiving the access point information transmitted by the second device through an uplink signal; where the uplink signal is obtained by the second device via modulation according to the access point information.

The access point information is carried through a carrying item of the reference signal. The carrying item includes at least one of time-frequency resource location, power, sequence or spatial characteristics.

In the embodiment of the present disclosure, the access point information includes at least one of identifier information of the access point, cell identity information corresponding to the access point, or location information of the second device.

When the access point information includes at least one of identifier information of the access point or cell identity information corresponding to the access point, the access point information further includes at least one of a measurement result of the second device on the reference signal corresponding to the access point information, or the location information of the access point. The determining an access point set corresponding to the second device based on the access point information includes at least one of the following: determining location information of the second device according to at least one of the identifier information of the access point or the cell identity information, and the measurement result; determining a candidate access point located in a first target area based on the location information of the second device; determining an element of the access point set corresponding to the second device according to the determined candidate access point; or, determining, based on at least one of the identifier information or the cell identity information of the access point and the measurement result, a candidate access point whose signal quality meets a first condition; determining an element of the access point set corresponding to the second device according to the determined candidate access point; or, determining, based on at least one of the identifier information or cell identity information of the access point and the location information of the access point, a candidate access point located in a second target area; determining, based on the determined candidate access point, an element of the access point set corresponding to the second device.

In the embodiment of the present disclosure, when the access point information includes location information of the second device, the determining an access point set corresponding to the second device based on the access point information, includes: according to the location information of the second device, determining a candidate access point located in a third target area; determining an element of the access point set corresponding to the second device based on the determined candidate access point.

The determining the element of the access point set corresponding to the second device according to the determined candidate access point includes: obtaining service information of the determined candidate access point; obtaining the element of the access point set corresponding to the second device according to the determined service information of the candidate access point; where the determined service information of the candidate access point includes at least one of the following: a current resource occupancy rate of the determined candidate access point; a current traffic amount of the determined candidate access point.

In the embodiment of the present disclosure, the obtaining access point information includes: controlling a candidate access point to monitor a request signal transmitted by the second device; and obtaining the access point information based on a monitoring result of the candidate access point.

Further, the information processing apparatus further includes: a first sending unit used to, before obtaining the access point information, transmit resource configuration information for the request signal to the second device; where the resource configuration information includes at least one of: time-frequency resource location, sequence or transmission power.

The access point information includes at least one of identifier information, location information, capability level information, service requirement information, or coverage requirement information of the second device carried by the request signal; and/or, the access point information further includes: location information of the second device determined according to first information of the request signal. The first information includes at least one of signal strength, arrival time difference or arrival angle.

In this embodiment of the present disclosure, the candidate access point is determined based on the location information of the second device, or determined based on a fourth target area determined by the first device.

The determining the access point set corresponding to the second device according to the access point information includes: determining the access point set corresponding to the second device according to the access point information and service information of other access point; where other access point are an access point other than the access point corresponding to the access point information; the service information of the other access point includes at least one of the following: current resource occupancy ratio of other access point; current traffic amount of other access point.

Further, the information processing apparatus further includes: a second sending unit used to, after determining the access point set corresponding to the second device according to the access point information, transmit an initial access signal through the access point in the access point set; a first receiving unit used to receive a random access signal transmitted by the second device according to the initial access signal.

The frequency and/or time of the initial access signal are associated with the request signal.

In the embodiment of the present disclosure, the access point information is access point information corresponding to a first reference signal; where the first reference signal is a reference signal that satisfies a second condition among all reference signals detected by the second device.

The obtaining access point information includes: obtaining access point information through a first connection; where the first connection refers to a connection established through a first manner, the first manner includes at least one of a first access technology or a first spectrum.

It is to be noted here that the above apparatus provided in the embodiment of the present disclosure can implement all the method steps implemented by the first device in the above method embodiment, and can achieve the same technical effect. The parts and beneficial effects of this embodiment that are the same as those in the method embodiment will not be described in detail here.

One embodiment of the present disclosure further provides an information processing apparatus applied to a second device, as shown in FIG. 8, including:
a second obtaining unit 81 used to obtain third information; where the third information includes part or all of access point information detected by a second device, and/or information carried in a request signal to be transmitted by the second device;
a first transmission unit 82 used to perform information transmission according to the third information, where the third information is used to determine the access point set corresponding to the second device.

The information processing apparatus according to the embodiment of the present disclosure, obtains third information, where the third information includes part or all of access point information detected by a second device, and/or information carried in a request signal to be transmitted by the second device; and performs information transmission according to the third information, this enables setting a suitable access point set for the second device according to the access point information, thereby forming a dedicated network coverage for the second device, which can avoid the problem of fixed cell division and well solves the problem of fixed cell division in the information processing solution for network coverage in the related art.

The obtaining the third information includes: detecting a reference signal transmitted by a candidate access point; determining the access point information based on part or all of detected reference signals. The performing information transmission according to the third information includes: transmitting the access point information to the first device.

In the embodiment of the present disclosure, the transmitting the access point information to the first device includes: transmitting the access point information to the first device through an uplink signal; where the uplink signal is obtained by the second device via modulation according to the access point information.

The access point information is carried through a carrying item of the reference signal. The carrying item includes at least one of time-frequency resource location, power, sequence or spatial characteristics.

In the embodiment of the present disclosure, the access point information includes at least one of identifier information of the access point, cell identity information corresponding to the access point, or location information of the second device.

When the access point information includes at least one of identifier information of the access point or cell identity information corresponding to the access point, the access point information further includes at least one of a measurement result of the second device on the reference signal corresponding to the access point information, or the location information of the access point.

In the embodiment of the present disclosure, the obtaining the third information includes: determining information carried by a to-be-transmitted request signal. The performing information transmission according to the third information includes: according to the information carried by the request signal, transmitting the request signal.

Further, the information processing apparatus further includes: a third obtaining unit used to, before transmitting the request signal according to the information carried by the request signal, obtain resource configuration information for the request signal. The transmitting the request signal according to the information carried by the request signal, includes: transmitting the request signal according to the resource configuration information and the information carried by the request signal; where the resource configuration information includes at least one of: time-frequency resource location, sequence or transmission power.

The obtaining the resource configuration information for the request signal includes: receiving the resource configuration information for the request signal transmitted by a first device; or obtaining pre-agreed resource configuration information for the request signal.

In this embodiment of the present disclosure, the information carried by the request signal includes at least one of identifier information, location information, capability level information, service requirement information, or coverage requirement information of the second device.

Further, the information processing apparatus further includes a second receiving unit used to, after performing information transmission according to the third information, receive an initial access signal transmitted by the first device through an access point in the access point set; a third sending unit used to transmit a random access signal to the first device according to the initial access signal. The access point set is determined by the first device according to the third information.

The frequency and/or time of the initial access signal are associated with the request signal.

In the embodiment of the present disclosure, the access point information is access point information corresponding to a first reference signal; where the first reference signal is a reference signal that satisfies a second condition among all reference signals detected by the second device.

The performing information transmission according to the third information includes: performing the information transmission according to the third information through a first connection; where the first connection refers to a connection established through a first manner, the first manner includes at least one of a first access technology or a first spectrum.

It is to be noted here that the above apparatus provided in the embodiment of the present disclosure can implement all the method steps implemented by the second device in the above method embodiment, and can achieve the same technical effect. The parts and beneficial effects of this embodiment that are the same as those in the method embodiment will not be described in detail here.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

One embodiment of the present disclosure further provides a processor-readable storage medium, which includes a program stored thereon. The program is used to cause a processor to execute the information processing method on the first device side; or, the computer program is used to cause the processor to execute the information processing method on the second device side.

The processor-readable storage medium may be any available medium or data storage device that can be accessed by a processor, including but not limited to magnetic storage (such as floppy disk, hard disk, magnetic tape, magneto-optical disk (MO)), optical storage (such as CD, DVD, BD, HVD), and semiconductor memory (such as ROM, EPROM, EEPROM, non-volatile memory (Nand flash), solid-state drive (SSD)).

The implementation embodiments of the information processing method on the first device side or the second device side are all applicable to the embodiments of the processor-readable storage medium and can achieve the same technical effects.

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, this application may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

Obviously, those skilled in the art can make various changes and modifications to the present disclosure without departing from the spirit and scope of the present disclosure. Thus, if these modifications and variations of the present disclosure fall within the scope of the claims of the present disclosure and equivalent technologies thereof, the present disclosure also intends to include these modifications and variations.

## Claims

1. An information processing method, applied to a first device, comprising:
obtaining access point information; wherein the access point information includes access point information detected by a second device, and/or access point information obtained based on monitoring a request signal transmitted by the second device;
determining an access point set corresponding to the second device according to the access point information.

2. The method according to claim 1, wherein the obtaining access point information includes:
controlling a candidate access point to transmit a reference signal; and
receiving the access point information transmitted by the second device after the second device detects the reference signal.

3. The method according to claim 2, wherein the receiving the access point information transmitted by the second device after the second device detects the reference signal, includes:
receiving the access point information transmitted by the second device through an uplink signal;
wherein the uplink signal is obtained by the second device via modulation according to the access point information.

4. The method according to claim 2 or 3, wherein the access point information is carried through a carrying item of the reference signal;
the carrying item includes at least one of time-frequency resource location, power, sequence or spatial characteristics.

5. The method according to claim 2, wherein the access point information includes at least one of identifier information of the access point, cell identity information corresponding to the access point, or location information of the second device.

6. The method according to claim 5, wherein when the access point information includes at least one of identifier information of the access point or cell identity information corresponding to the access point, the access point information further includes at least one of a measurement result of the second device on the reference signal corresponding to the access point information, or location information of the access point; the determining an access point set corresponding to the second device according to the access point information includes at least one of the following:
determining location information of the second device according to at least one of the identifier information of the access point or the cell identity information, and the measurement result; determining a candidate access point located in a first target area based on the location information of the second device; determining an element of the access point set corresponding to the second device according to the determined candidate access point; or,
determining, based on at least one of the identifier information of the access point or the cell identity information, and the measurement result, a candidate access point whose signal quality meets a first condition; determining an element of the access point set corresponding to the second device according to the determined candidate access point; or,
determining, based on at least one of the identifier information of the access point or cell identity information, and the location information of the access point, a candidate access point located in a second target area; determining an element of the access point set corresponding to the second device based on the determined candidate access point.

7. The method according to claim 5, wherein when the access point information includes location information of the second device, the determining an access point set corresponding to the second device according to the access point information, includes:
according to the location information of the second device, determining a candidate access point located in a third target area;
determining an element of the access point set corresponding to the second device based on the determined candidate access point.

8. The method according to claim 6 or 7, wherein the determining an element of the access point set corresponding to the second device based on the determined candidate access point, includes:
obtaining service information of the determined candidate access point;
obtaining the element of the access point set corresponding to the second device according to the service information of the determined candidate access point;
wherein the service information of the determined candidate access point includes at least one of the following:
a current resource occupancy rate of the determined candidate access point;
a current traffic amount of the determined candidate access point.

9. The method according to claim 1, wherein the obtaining access point information includes:
controlling a candidate access point to monitor a request signal transmitted by the second device; and
obtaining the access point information based on a monitoring result of the candidate access point.

10. The method according to claim 9, wherein before obtaining the access point information, the method further includes:
transmitting resource configuration information for the request signal to the second device;
wherein the resource configuration information includes at least one of: time-frequency resource location, sequence or transmission power.

11. The method according to claim 9, wherein the access point information includes at least one of identifier information, location information, capability level information, service requirement information, or coverage requirement information of the second device carried by the request signal; and/or,
the access point information further includes: location information of the second device determined according to first information of the request signal; wherein the first information includes at least one of signal strength, arrival time difference or arrival angle.

12. The method according to claim 2 or 9, wherein the candidate access point is determined based on the location information of the second device, or determined based on a fourth target area determined by the first device.

13. The method according to claim 1, wherein the determining an access point set corresponding to the second device according to the access point information, includes:
determining the access point set corresponding to the second device according to the access point information and service information of other access point;
wherein other access point is an access point other than the access point corresponding to the access point information;
the service information of the other access point includes at least one of the following:
a current resource occupancy ratio of other access point;
a current traffic amount of other access point.

14. The method according to claim 1, wherein after determining an access point set corresponding to the second device according to the access point information, the method includes:
transmitting an initial access signal through an access point in the access point set;
receiving a random access signal transmitted by the second device according to the initial access signal.

15. The method according to claim 14, wherein frequency and/or time of the initial access signal are associated with the request signal.

16. The method according to claim 1, wherein the access point information is access point information corresponding to a first reference signal;
wherein the first reference signal is a reference signal that satisfies a second condition among all reference signals detected by the second device.

17. The method according to claim 1, wherein the obtaining access point information includes:
obtaining the access point information through a first connection;
wherein the first connection refers to a connection established through a first manner, the first manner includes at least one of a first access technology or a first spectrum.

18. An information processing method, applied to a second device, comprising:
obtaining third information; wherein the third information includes part or all of access point information detected by a second device, and/or information carried in a request signal to be transmitted by the second device;
performing information transmission according to the third information; wherein the third information is used to determine an access point set corresponding to the second device.

19. The method according to claim 18, wherein the obtaining the third information includes:
detecting a reference signal transmitted by a candidate access point;
determining the access point information based on part or all of detected reference signals;
wherein the performing information transmission according to the third information includes:
transmitting the access point information to the first device.

20. The method according to claim 19, wherein the transmitting the access point information to the first device, includes:
transmitting the access point information to the first device through an uplink signal;
wherein the uplink signal is obtained by the second device via modulation according to the access point information.

21. The method according to claim 19, wherein the access point information is carried through a carrying item of the reference signal;
the carrying item includes at least one of time-frequency resource location, power, sequence or spatial characteristics.

22. The method according to claim 19, wherein the access point information includes at least one of identifier information of the access point, cell identity information corresponding to the access point, or location information of the second device.

23. The method according to claim 22, wherein when the access point information includes at least one of identifier information of the access point or cell identity information corresponding to the access point, the access point information further includes at least one of a measurement result of the second device on the reference signal corresponding to the access point information, or location information of the access point.

24. The method according to claim 18, wherein the obtaining the third information includes:
determining information carried by a to-be-transmitted request signal;
wherein the performing information transmission according to the third information includes:
transmitting the request signal according to the information carried by the request signal.

25. The method according to claim 24, wherein before transmitting the request signal according to the information carried by the request signal, the method further includes:
obtaining resource configuration information for the request signal;
wherein the transmitting the request signal according to the information carried by the request signal, includes:
transmitting the request signal according to the resource configuration information and the information carried by the request signal;
wherein the resource configuration information includes at least one of: time-frequency resource location, sequence or transmission power.

26. The method according to claim 25, wherein the obtaining resource configuration information for the request signal includes:
receiving the resource configuration information for the request signal transmitted by a first device; or
obtaining pre-agreed resource configuration information for the request signal.

27. The method according to claim 24, wherein the information carried by the request signal includes at least one of identifier information, location information, capability level information, service requirement information, or coverage requirement information of the second device.

28. The method according to claim 18, wherein after performing information transmission according to the third information, the method further includes:
receiving an initial access signal transmitted by the first device through an access point in the access point set; and
transmitting a random access signal to the first device according to the initial access signal;
wherein the access point set is determined by the first device according to the third information.

29. The method according to claim 28, wherein frequency and/or time of the initial access signal are associated with the request signal.

30. The method according to claim 18, wherein the access point information is access point information corresponding to a first reference signal;
wherein the first reference signal is a reference signal that satisfies a second condition among all reference signals detected by the second device.

31. The method according to claim 18, wherein the performing information transmission according to the third information, includes:
performing the information transmission according to the third information through a first connection;
wherein the first connection refers to a connection established through a first manner, the first manner includes at least one of a first access technology or a first spectrum.

32. An information processing device, which is a first device, comprising: a memory, a transceiver, and a processor;
wherein the memory is used to store a computer program; the transceiver is used to transmit and receive data under the control of the processor; the processor is used to read the computer program in the memory and perform the following operations:
obtaining access point information; wherein the access point information includes access point information detected by a second device, and/or access point information obtained based on monitoring a request signal transmitted by the second device;
determining an access point set corresponding to the second device according to the access point information.

33. The device according to claim 32, wherein the obtaining access point information includes:
controlling a candidate access point to transmit a reference signal; and
receiving the access point information transmitted by the second device after the second device detects the reference signal.

34. The device according to claim 32, wherein the obtaining access point information includes:
controlling a candidate access point to monitor a request signal transmitted by the second device; and
obtaining the access point information based on a monitoring result of the candidate access point.

35. An information processing device, which is a second device, comprising: a memory, a transceiver, and a processor;
wherein the memory is used to store a computer program; the transceiver is used to transmit and receive data under the control of the processor; the processor is used to read the computer program in the memory and perform the following operations:
obtaining third information; wherein the third information includes part or all of access point information detected by a second device, and/or information carried in a request signal to be transmitted by the second device;
performing information transmission according to the third information; wherein the third information is used to determine an access point set corresponding to the second device.

36. The device according to claim 35, wherein the obtaining the third information includes:
detecting a reference signal transmitted by a candidate access point;
determining the access point information based on part or all of detected reference signals;
wherein the performing information transmission according to the third information includes:
transmitting the access point information to the first device.

37. The device according to claim 35, wherein the obtaining the third information includes:
determining information carried by a to-be-transmitted request signal;
wherein the performing information transmission according to the third information includes:
transmitting the request signal according to the information carried by the request signal.

38. An information processing apparatus, applied to a first device, comprising:
a first obtaining unit configured to obtain access point information; wherein the access point information includes access point information detected by a second device, and/or access point information obtained based on monitoring a request signal transmitted by the second device;
a first determining unit configured to determine an access point set corresponding to the second device according to the access point information.

39. The apparatus according to claim 38, wherein the obtaining access point information includes:
controlling a candidate access point to transmit a reference signal; and
receiving the access point information transmitted by the second device after the second device detects the reference signal.

40. The apparatus according to claim 39, wherein the receiving the access point information transmitted by the second device after the second device detects the reference signal, includes:
receiving the access point information transmitted by the second device through an uplink signal;
wherein the uplink signal is obtained by the second device via modulation according to the access point information.

41. The apparatus according to claim 39 or 40, wherein the access point information is carried through a carrying item of the reference signal;
the carrying item includes at least one of time-frequency resource location, power, sequence or spatial characteristics.

42. The apparatus according to claim 39, wherein the access point information includes at least one of identifier information of the access point, cell identity information corresponding to the access point, or location information of the second device.

43. The apparatus according to claim 42, wherein when the access point information includes at least one of identifier information of the access point or cell identity information corresponding to the access point, the access point information further includes at least one of a measurement result of the second device on the reference signal corresponding to the access point information, or location information of the access point; the determining an access point set corresponding to the second device according to the access point information includes at least one of the following:
determining location information of the second device according to at least one of the identifier information of the access point or the cell identity information, and the measurement result; determining a candidate access point located in a first target area based on the location information of the second device; determining an element of the access point set corresponding to the second device according to the determined candidate access point; or,
determining, based on at least one of the identifier information of the access point or the cell identity information, and the measurement result, a candidate access point whose signal quality meets a first condition; determining an element of the access point set corresponding to the second device according to the determined candidate access point; or,
determining, based on at least one of the identifier information of the access point or cell identity information, and the location information of the access point, a candidate access point located in a second target area; determining an element of the access point set corresponding to the second device based on the determined candidate access point.

44. The apparatus according to claim 42, wherein when the access point information includes location information of the second device, the determining an access point set corresponding to the second device according to the access point information, includes:
according to the location information of the second device, determining a candidate access point located in a third target area;
determining an element of the access point set corresponding to the second device based on the determined candidate access point.

45. The apparatus according to claim 43 or 44, wherein the determining an element of the access point set corresponding to the second device based on the determined candidate access point, includes:
obtaining service information of the determined candidate access point;
obtaining the element of the access point set corresponding to the second device according to the service information of the determined candidate access point;
wherein the service information of the determined candidate access point includes at least one of the following:
a current resource occupancy rate of the determined candidate access point;
a current traffic amount of the determined candidate access point.

46. The apparatus according to claim 38, wherein the obtaining access point information includes:
controlling a candidate access point to monitor a request signal transmitted by the second device; and
obtaining the access point information based on a monitoring result of the candidate access point.

47. The apparatus according to claim 46, wherein the apparatus further includes:
a first sending unit configured to, before obtaining the access point information, transmit resource configuration information for the request signal to the second device;
wherein the resource configuration information includes at least one of: time-frequency resource location, sequence or transmission power.

48. The apparatus according to claim 46, wherein the access point information includes at least one of identifier information, location information, capability level information, service requirement information, or coverage requirement information of the second device carried by the request signal; and/or,
the access point information further includes: location information of the second device determined according to first information of the request signal; wherein the first information includes at least one of signal strength, arrival time difference or arrival angle.

49. The apparatus according to claim 39 or 46, wherein the candidate access point is determined based on the location information of the second device, or determined based on a fourth target area determined by the first device.

50. The apparatus according to claim 38, wherein the determining an access point set corresponding to the second device according to the access point information, includes:
determining the access point set corresponding to the second device according to the access point information and service information of other access point;
wherein other access point is an access point other than the access point corresponding to the access point information;
the service information of the other access point includes at least one of the following:
a current resource occupancy ratio of other access point;
a current traffic amount of other access point.

51. The apparatus according to claim 38, wherein the apparatus further includes:
a second sending unit configured to, after determining an access point set corresponding to the second device according to the access point information, transmit an initial access signal through an access point in the access point set;
a first receiving unit configured to receive a random access signal transmitted by the second device according to the initial access signal.

52. The apparatus according to claim 51, wherein frequency and/or time of the initial access signal are associated with the request signal.

53. The apparatus according to claim 38, wherein the access point information is access point information corresponding to a first reference signal;
wherein the first reference signal is a reference signal that satisfies a second condition among all reference signals detected by the second device.

54. The apparatus according to claim 38, wherein the obtaining access point information includes:
obtaining the access point information through a first connection;
wherein the first connection refers to a connection established through a first manner, the first manner includes at least one of a first access technology or a first spectrum.

55. An information processing apparatus, applied to a second device, comprising:
a second obtaining unit configured to obtain third information; wherein the third information includes part or all of access point information detected by a second device, and/or information carried in a request signal to be transmitted by the second device;
a first transmission unit configured to perform information transmission according to the third information; wherein the third information is used to determine an access point set corresponding to the second device.

56. The apparatus according to claim 55, wherein the obtaining the third information includes:
detecting a reference signal transmitted by a candidate access point;
determining the access point information based on part or all of detected reference signals;
wherein the performing information transmission according to the third information includes:
transmitting the access point information to the first device.

57. The apparatus according to claim 56, wherein the transmitting the access point information to the first device, includes:
transmitting the access point information to the first device through an uplink signal;
wherein the uplink signal is obtained by the second device via modulation according to the access point information.

58. The apparatus according to claim 56, wherein the access point information is carried through a carrying item of the reference signal;
the carrying item includes at least one of time-frequency resource location, power, sequence or spatial characteristics.

59. The apparatus according to claim 56, wherein the access point information includes at least one of identifier information of the access point, cell identity information corresponding to the access point, or location information of the second device.

60. The apparatus according to claim 59, wherein when the access point information includes at least one of identifier information of the access point or cell identity information corresponding to the access point, the access point information further includes at least one of a measurement result of the second device on the reference signal corresponding to the access point information, or location information of the access point.

61. The apparatus according to claim 55, wherein the obtaining the third information includes:
determining information carried by a to-be-transmitted request signal;
wherein the performing information transmission according to the third information includes:
transmitting the request signal according to the information carried by the request signal.

62. The apparatus according to claim 61, wherein the apparatus includes:
a third obtaining unit configured to, before transmitting the request signal according to the information carried by the request signal, obtain resource configuration information for the request signal;
wherein the transmitting the request signal according to the information carried by the request signal, includes:
transmitting the request signal according to the resource configuration information and the information carried by the request signal;
wherein the resource configuration information includes at least one of: time-frequency resource location, sequence or transmission power.

63. The apparatus according to claim 62, wherein the obtaining resource configuration information for the request signal includes:
receiving the resource configuration information for the request signal transmitted by a first device; or
obtaining pre-agreed resource configuration information for the request signal.

64. The apparatus according to claim 55, wherein the information carried by the request signal includes at least one of identifier information, location information, capability level information, service requirement information, or coverage requirement information of the second device.

65. The apparatus according to claim 65, wherein the apparatus further includes:
a second receiving unit configured to, after performing information transmission according to the third information, receive an initial access signal transmitted by the first device through an access point in the access point set; and
a third sending unit configured to transmit a random access signal to the first device according to the initial access signal;
wherein the access point set is determined by the first device according to the third information.

66. The apparatus according to claim 55, wherein frequency and/or time of the initial access signal are associated with the request signal.

67. The apparatus according to claim 55, wherein the access point information is access point information corresponding to a first reference signal;
wherein the first reference signal is a reference signal that satisfies a second condition among all reference signals detected by the second device.

68. The apparatus according to claim 55, wherein the performing information transmission according to the third information, includes:
performing the information transmission according to the third information through a first connection;
wherein the first connection refers to a connection established through a first manner, the first manner includes at least one of a first access technology or a first spectrum.

69. A processor-readable storage medium, comprising: a computer program stored thereon; wherein the computer program is used to cause a processor to perform the information processing method according to any one of claims 1 to 17; or,
the computer program is used to cause the processor to perform the information processing method according to any one of claims 18 to 31.
